# EUROPÄISCHE PATENTANMELDUNG

(11) **EP 2 790 169 A1**
(43) Veröffentlichungstag der Anmeldung: **15.10.2014**
(21) Anmeldenummer: 14157050.7
(22) Anmeldetag: 27.02.2014
(51) Int. Cl.: G09B 5/06, G09B 19/00

(54) **Vorrichtung zur Entwicklung der richtigen Körperhaltung**

(30) Priorität: 28.02.2013 RU 2013000195
(71) Anmelder: Kudakov, Andrej D., 141074 Moskauer Gebiet, gor. Korolev-4 (RU)
(72) Erfinder: Kudakov, Andrej D., 141074 Moskauer Gebiet, gor. Korolev-4 (RU)
(74) Vertreter: Jeck, Anton

(57) **Zusammenfassung**

Die Erfindung bezieht sich auf eine Vorrichtung zur Entwicklung der richtigen Körperhaltung, umfassend:
ein erstes Mittel, angepasst zur Darstellung eines auf einen Datenträger gespeicherten Bildmaterials mit der Darstellung eines eine Übung ideal ausführenden Menschen und zur Einblendung bestimmter Körperbereiche gleichzeitig mit einer taktilen Einwirkung auf die gleichen Bereiche der Wirbelsäule eines Patienten;
ein zweites Mittel, angepasst zur Darstellung von Bereichen des Körpers im vorstehenden Bildmaterial mittels Anleuchtung;
ein drittes Mittel angepasst zur Wiedergabe von Tönen.

## Beschreibung

Die Erfindung betrifft eine Vorrichtung zur Entwicklung der richtigen Körperhaltung beispielsweise des Menschen.

Die Erfindung bezieht sich auf eine Vorrichtung zum Einsatz in der Medizin, und zwar auf nichtmedikamentöse Behandlungsmaßnahmen (Gesundheitsverbesserung) des Menschen. Sie kann zur Behandlung von Rückenkrankheiten sowie Osteochondrose, Skoliose und anderen Erkrankungen angewendet werden, die mit einer Rückgratverkrümmung verbunden sind.

Aus dem Stand der Technik ist ein Verfahren (Patentanmeldung RU 2006130199, veröffentlicht am 27.02.2008) zur Vorbeugung und Prophylaxe von Rückenhaltungsfehlern, Wirbelsäulenverkrümmung, Brustkorbdeformation und Verletzung der Halswirbelsäule bei einem am PC tätigen Menschen bekannt. Nach diesem Verfahren hat der Mensch die Möglichkeit, seine Kopfstellung visuell und ständig zu kontrollieren und seine Körperstellung zu verbessern, ohne dass die Arbeit unterbrochen wird, und zwar dadurch, dass ein widerspiegeIndes Spiegelelement oberhalb der oberen Bildschirmkante angeordnet ist. Dieses Element kann dabei dem Menschen das Spiegelbild seines Gesichts im gleichen Blickfeld wie der Bildschirm zwecks Kontrolle anzeigen.

Der Mangel dieses Verfahrens besteht darin, dass der Patient seine Kopf- und Körperstellung selbst kontrollieren muss, wozu er keine fachtechnische Vorbereitung und Ausbildung hat.

Durch das Patent RU 2300362 (veröffentlicht am 10.06.2007) ist ein Verfahren zur Gesundung des Menschen bekannt, in dem seine Haltung verändert und die Geübtheit der bewussten Muskelkontrolle der langen für die senkrechte Rückenhaltung zuständigen Rückenmuskeln (M. erector trunci) geschult wird.

Dieses Verfahren ist aber nur für aktive Patienten geeignet, die beachtliche körperliche Beanspruchungen problemlos verkraften können, denn die Übung und die Aneignung des richtigen Haltungsstereotyps setzen solche Beanspruchungen voraus.

Es ist Aufgabe der Erfindung, die Auswahl an technischen Mitteln und die Entwicklung eines Verfahrens zur gesundheitsfördernden Einwirkung auf den Patienten zu erweitern. Erfindungsgemäß wird dies mit der Vorrichtung gemäß dem unabhängigen Anspruch erreicht. Damit werden dauerhafte sinaptische Zusammenhänge im Gehirn des Patienten geschaffen, indem bedingt-reflektorische Beziehungen (Zusammenhänge) zwischen einem von Fachleuten erstellten Muster (Modell) der ideal durchgeführten Übung und dem Patienten aufgebaut werden.

Die vorliegende Erfindung betrifft somit eine Vorrichtung zur Entwicklung der richtigen Körperhaltung, umfassend:
ein erstes Mittel, angepasst zur Darstellung eines auf einen Datenträger gespeicherten Bildmaterials mit der Darstellung eines eine Übung ideal (beispielsweise nach der herrschenden Meinung optimal) ausführenden Menschen und zur gegebenenfalls gleichzeitigen Einblendung bestimmter, d. h. vorher festgelegter und ggf. besonders interessierender, Körperbereiche gleichzeitig mit einer taktilen Einwirkung auf die gleichen Bereiche der Wirbelsäule eines Patienten;
ein zweites Mittel, angepasst zur Darstellung von Bereichen des Körpers im vorstehenden Bildmaterial mittels Anleuchtung;
ein drittes Mittel angepasst zur Wiedergabe von Tönen, beispielsweise einen Lautsprecher.

Unter der "richtigen Körperhaltung" im vorstehenden Sinn wird die vom orthopädischen Standpunkt aus optimale Körperhaltung, vor allem hinsichtlich der Rückgrats, verstanden.

Ein Beispiel für vorstehendes erstes Mittel, das in der erfindungsgemäßen Vorrichtung vorliegt, ist ein Bildschirm jeglicher Art. Bei dem auf einen Datenträger gespeicherten Bildmaterial handelt es sich um jegliches Bildmaterial, das auf einen beliebigen Datenträger gespeichert sein kann. Beispiele dafür sind DVD und Videos.

Bei der oben angegebenen Übung kann es sich um auf dem Gebiet der Orthopädie, insbesondere hinsichtlich des Rückgrates, an sich bekannte und übliche körperliche Übungen handeln.

Vorzugsweise weist die Vorrichtung weiterhin ein Mittel auf, das zum Sitzen, Stehen oder Liegen des Patienten angepasst ist, beispielsweise ein Sitz oder eine Liege.

In einer weiteren bevorzugten Ausführungsform der erfindungsgemäßen Vorrichtung ist im Bildmaterial ein Mensch als ein Modell einer halbdurchsichtigen menschlichen Figur mit einer durchschnittlichen Körpergestaltung ohne sichtbare sekundäre Geschlechtsmerkmale dargestellt, wobei vorzugsweise das Modell dabei eine schematische Darstellung des Rückgrats enthält, wobei einzelne Wirbel jeweils markiert abgebildet sind.

In einer anderen bevorzugten Ausführungsform der erfindungsgemäßen Vorrichtung kann das Bildmaterial zwei Teile aufweisen, wobei die Modellfigur im ersten Teil unbeweglich bleibt, einzelne Körperbereiche im Körper der Modellfigur der Reihe nach von oben nach unten rhythmisch ein- und ausgeblendet werden, wobei diese Körperbereiche den jeweiligen Wirbeln entsprechen und die Ein- und Ausblendung dabei von einer zu- und abnehmenden Tonstärke begleitet wird und die Modellfigur im zweiten Teil eine Übung ideal ausführt, jeder der am meisten durch die Einwirkung der Rückenmuskulatur beanspruchten Wirbel während der Übung der Reihen nach eingeblendet wird. Wie vorstehend ausgeführt wurde, kann das Bildmaterial zwei Teile aufweisen. Darunter werden inhaltlich voneinander abgegrenzte Abschnitte verstanden, wobei jeder Abschnitt eine Bildsequenz aus mindestens zwei Bildern aufweist.

Die erfindungsgemäße Vorrichtung kann im folgenden Verfahren eingesetzt werden, wobei ausdrücklich darauf hingewiesen wird, dass das nachfolgend beschriebene Verfahren auch dazu dient, die erfindungsgemäße Vorrichtung näher zu erläutern:
Das Verfahren bezieht sich auf die Gesundheitsverbesserung des Menschen durch die Entwicklung der richtigen Körperhaltung, wobei die Körperhaltung des Patienten im Sitzen, im Stehen oder im Liegen entwickelt werden kann und zwar dadurch, dass die Vorführung eines speziell aufgenommenen Übungsvideos mit der Darstellung eines eine Übung ideal ausführenden Menschen und der Einblendung von bestimmten Körperbereichen auf dem Bildschirm gleichzeitig mit der taktilen Einwirkung auf die gleichen Bereiche der Wirbelsäure des Patienten erfolgt, und dass bestimmte Bereiche des Rückgrats im Video mittels Anleuchtung eingeblendet werden, wobei dies von einem Tonsignal begleitet wird, und dass die mit der Darstellung auf dem Bildschirm gleichzeitige taktile Einwirkung auf die jeweiligen Bereiche des Rückgrats des Patienten von einem Gymnasten, einem Assistenten, einem Partner oder vom Patienten selbst vorgenommen wird.

Beispielsweise kann ein Mensch im Video als ein Modell einer halbdurchsichtigen menschlichen Figur mit einer durchschnittlichen Körpergestaltung ohne sichtbare sekundäre Geschlechtsmerkmale dargestellt werden, und das Modell dabei eine schematische Darstellung des Rückgrats enthalten, wobei einzelne Wirbel jeweils markiert abgebildet werden.

Das Video kann aus zwei Teilen (Episoden) bestehen, wobei die Modellfigur im ersten Teil unbeweglich bleibt, und einzelne Körperbereiche können im Körper der Modellfigur der Reihe nach von oben nach unten rhythmisch ein- und ausgeblendet werden, wobei diese Körperbereiche den jeweiligen Wirbeln entsprechen. Die Einund Ausblendung kann dabei von einer zu- und abnehmenden Tonstärke begleitet werden. Die Modellfigur im zweiten Teil kann eine Übung ideal ausführen. Jeder der am meisten durch die Einwirkung der Rückenmuskeln beanspruchte Wirbel kann während der Übung der Reihe nach eingeblendet werden und die Beugung danach erfolgen.

Die Übung kann von einem Fachmann aus der Heilgymnastik so gewählt werden, dass der maximale Nutzeffekt bei einer bestimmten Art der Rückgratkrankheiten erreicht wird. Die Bewegungen können in einem entspannten Zustand und im Rahmen der natürlichen (physiologischen) Gelenkbeweglichkeit ausgeführt werden.

Die Darstellung der idealen Ausführung der Übung im Video kann dadurch erstellt werden, dass eine oder mehrere Kameras beim Filmen die Bewegungen des Gymnasten erfassen, der dabei einen speziellen Anzug mit optischen Markierungen anhat, wobei der Gymnast die Übung in einem Studio macht, und aufgrund der erfassten Punktwolke und der Kenntnisse im Bereich von Anatomie und Biomechanik ein Bewegungsmodell der ausgewählten unsichtbaren Körperteile erzeugt wird.

Der Bildschirm kann vor dem Patienten, beispielsweise unmittelbar vor ihm, angeordnet sein, und die Bewegungsmuskeln der Augen des Patienten sollen entspannt sein und der Rücken keine Gegenstände berühren.

Der Gymnast, der Assistent, der Partner oder der Patient kann selbst gleichzeitig mit dem Ton und der Einblendung den Rücken des Patienten mit einem Zeigestock gemäß der Mittellinie des Körpers berühren, so dass die Berührungsstelle mit den Wirbelprojektionen in ihrem normalen Zustand (Grundstellung) ungefähr zusammenfällt.

Die gleichzeitigen Berührungen des Patientenrückens können nur im ersten Teil des Videos erfolgen.

Das mit der erfindungsgemäßen Vorrichtung durchführbare Verfahren wird nachfolgend näher erläutert.

Ein Fachmann wählt eine bestimmte Bewegung aus der Heilgymnastik aus. Dabei handelt es sich um eine Bewegung, die bei bestimmten Arten von Rückenkrankheiten maximal nützlich sein kann, zum Beispiel langsame Körperbeugung vorwärts und nachfolgende Körperrückführung (Aufheben) in die Grundstellung. Dabei muss die Bewegung folgende Anforderungen erfüllen: Die Bewegungen müssen in einem entspannten Zustand und innerhalb der natürlichen (physiologischen) Gelenkbeweglichkeit ausgeführt werden. Um die heilende Einwirkung auf den Patienten zu erreichen, wird ein Video vorbereitet, in dem die ideale Ausführung der Übung aufgenommen wird. Damit der Patient durch das Äußere des übenden Heilgymnasten nicht abgelenkt wird und um dem Patienten seine Identifikation mit dem abgebildeten (gefilmten) Gymnasten zu vereinfachen, wird im Video ein halbdurchsichtiges Modell der menschlichen Figur benutzt. Bei diesem Modell handelt es sich um eine Figur mit einer durchschnittlichen Körpergestaltung ohne sichtbare sekundäre Geschlechtsmerkmale. Das Modell enthält dabei eine schematische Darstellung des Rückgrats, wobei einzelne Wirbel jeweils markiert abgebildet werden. Während der Übung werden einzelne Körperbereiche der Reihe nach rhythmisch ein- und ausgeblendet. Diese Körperbereiche entsprechen den Wirbeln, die gerade bei der Körperbeugung betätigt werden. Die Einblendung wird von einer entsprechenden zu- und abnehmenden Tonstärke begleitet.

Das Modell der idealen Ausführung der Übung wird auf folgende Weise erstellt. Der Gymnast (der Trainer) muss über eine große Übungserfahrung verfügen, das heißt, er soll die gewählte Übung lang genug selbst gemacht haben, und er muss einen Sonderanzug mit optischen Markierungen für ein Bewegungserfassungssystem tragen (motion capture) (http://ru.wikipedia.org/wiki/ 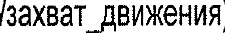 ). Der Gymnast macht die Übung in einem Studio. Dabei wird er mittels Kameras für ein Bewegungserfassungssystem gefilmt. Dadurch wird eine Punktwolke erstellt. Sie bildet ein digitales Bewegungsmodell der Körperoberfläche des Gymnasten während der Übung aus. Aufgrund der erfassten Punktwolke und der Kenntnisse im Bereich von Anatomie und Biomechanik wird ein Bewegungsmodell der ausgewählten unsichtbaren Körperteile (Organe, Knochen, Gelenke, Bänder) erzeugt. Das digitale Modell wird verfeinert (näher präzisiert), um die (anatomisch und biomechanisch) ideale Ausführung der gewählten Übung besser zu veranschaulichen. Zusätzlich wird eine Episode erstellt, in der das Modell unbeweglich bleibt, während einzelne mit bestimmten Wirbeln zusammengehörende Körperbereiche am Modellkörper der Reihe nach von oben nach unten rhythmisch ein- und ausgeblendet werden. Die Einblendung wird von einer entsprechenden zu- und abnehmenden Tonstärke begleitet. Bei jeder Einblendung jedes weiteren Wirbels berührt der Gymnast (der Trainer), ein Übungspartner des Patienten oder der Übende selbst den Rücken des Patienten mit einem Zeigestock gemäß der Mittellinie des Körpers. Die zusätzliche Episode wird vorteilhaft dreimal vor der Hauptepisode mit der Veranschaulichung der Übung vorgeführt. Die Hauptepisode wird ebenfalls vorteilhaft dreimal vorgeführt. Beim Wechsel auf jede weitere Episode während der Vorführung soll eine visuelle und akustische Ununterbrochenheit sichergestellt werden, um zu vermeiden, dass die beim Patienten entstehende Selbstidentifikation mit dem Modell gestört wird. Die vorteilhaften Bildschirmabmessungen für die Filmvorführung werden zwischen 0,7 m und 2,5 m gewählt. Während der Übung wird ein 0,3 m bis 0,4 m langer Zeigestock verwendet.

Die Übung zur Durchführung des Verfahrens wird in folgender Reihenfolge ausgeführt:
1. Der Patient steht auf oder setzt sich so dem Bildschirm zugewandt, dass der Bildschirm direkt vor dem Gesicht des Patienten ist, und dass die Bewegungsmuskeln der Augen (musculi oculomotorii) völlig entspannt sind. Der Rücken soll dabei keine Gegenstände berühren. Bei gehbehinderten Patienten können die Übungen auch im Liegen, vorteilhaft in Seitenlage, gemacht werden. Der Blick soll entspannt sein, als ob man durch den Bildschirm hindurch in die Ferne schaut.
2. Das Video wird gestartet. Die erste Episode wird vorteilhaft dreimal vorgeführt. Während der Vorführung der ersten Episode ist die halbdurchsichtige Figur auf dem Bildschirm unbeweglich. Dieser Modellkörper enthält eine schematische dreidimensionale Darstellung des Rückgrats (Brustwirbelsäule, Lendenwirbelsäule, Kreuzbein). Die den Wirbeln zugeordneten Körperbereiche werden nacheinander von oben nach unten in regelmäßigen Zeitabständen ein- und ausgeblendet. Gleichzeitig nimmt die Tonstärke zu und ab. Der Gymnast, ein Assistent, ein Übungspartner oder der Patient selbst berührt dabei den Rücken des Patienten mit einem Zeigestock gemäß der Körpermittellinie. Die Berührungen erfolgen synchron mit Tonänderung und Einblendung, so dass die Berührungsstelle mit den Wirbelprojektionen in ihrem normalen Zustand (Grundstellung) ungefähr zusammenfällt. Diese Episode wird vorteilhaft dreimal wiederholt. Die Wirbel werden ab dem 1. Brustwirbel abwärts aufeinanderfolgend angeleuchtet. Der Partner oder der Übende selbst berührt den Rücken mit dem Zeigestock gemäß der Mittellinie jedes Mal beim Einblenden jedes weiteren Wirbels. Als Ergebnis dieser Übungsphase kommt die neurologische Identifikation (Illusion einer Assoziation) mit der Figur auf dem Bildschirm zustande.
3. Während der Vorführung der Episode mit der eigentlichen Übung wird der jeweilige Wirbel der Figur eingeblendet, und danach erfolgt die Beugung. Der Übende steht dabei maximal entspannt und unbeweglich und blickt in die Ferne. Der Gymnast, der Assistent, der Übungspartner oder der Patient selbst berührt dabei den Rücken des Patienten mit einem Zeigestock gemäß der Körpermittellinie. Die Berührungen erfolgen synchron mit Tonänderung und Einund Ausblendung, so dass die Berührungsstelle mit den Wirbelprojektionen in ihrem normalen Zustand (Grundstellung) ungefähr zusammenfällt. Gemäß einer Ausgestaltung beobachtet der Patient nur die Bewegung der Figur, ohne sich zu bewegen. Diese Episode wird vorteilhaft dreimal wiederholt.

Das Verfahren ist dank dem festgestellten Effekt der Erregung von Spiegelneuronen während der Beobachtung der Bewegungen eines anderen Menschen oder eines Tieres mit ähnlicher Körpergestaltung ausführbar (V. Kossonogov. Spiegelneuronen: Kurze wissenschaftliche Übersicht. - Rostov-am-Don, 2009. - 24 S.). Laut einer der modernen Lehren entsteht die Skoliose infolge der Bewegungsstörung bei kleinen Drehmuskeln, welche für die Verdrehungsbewegungen der Wirbelsäule zuständig sind. Diese Drehmuskeln werden nicht willkürlich (getrennt) betätigt (gesteuert), obwohl sie strukturmäßig der quergestreiften Muskulatur entsprechen. Nach den Forschungen von Ramachandran (Ramachandran V.S. Plasticity and functional recovery in neurology. (2005), Clinical medicine, 5(4), 368-73) ist das Gehirn von erwachsenen Säugetieren imstande, die Struktur (zellenmäßig) und die Funktionsweise je nach Stimulation und Tätigkeit zu verändern. Bei der Stimulation eines Körpergebiets nimmt die Menge der für die Steuerung dieses Körpergebiets zuständigen Neuronen zu. Es ist festgestellt, dass die Sensorstimulation eine Antwort im Nervensystem hervorruft: Die Neuronen sondern Wachstumsfaktoren ab, und die motorischen Neuronen der Hirnrinde werden bei einer Illusion der Bewegung aktiv (Naito E. and Ehrsson HH. Kinesthetic illusory wrist movements activate motor-related areas that are active during movement execution. Neuroreport. (2001), 12:1-5).

### Durchführungsbeispiel des Verfahrens mit der erfindungsgemäßen Vorrichtung

### Patient Vladimir, 24 Jahre, Diagnose: Skoliose 2. Stufe.

Ein Fachmann wählt als Heilübung eine langsame Körperbeugung vorwärts und eine nachfolgende Körperrückführung (Aufheben) in die Grundstellung. Diese Übung wird bei den meisten Erkrankungen angewendet, die mit Haltungsabweichungen verbunden sind. Es wird ein Video mit einem Modell der idealen Ausführung der Übung vorbereitet. Dafür muss ein Gymnast (Trainer) über eine große Übungserfahrung verfügen. Das heißt, er soll die gewählte Übung lang genug selbst geübt haben, und er muss einen Sonderanzug mit optischen Markierungen für ein Bewegungserfassungssystem tragen (motion capture) (http://ru.wikipedia.org/wiki/ 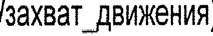 ). Der Gymnast macht die Übung in einem Studio. Dabei wird er mittels Kameras für ein Bewegungserfassungssystem gefilmt. Die erstellte Lichtpunktwolke bildet ein digitales Bewegungsmodell der Körperoberfläche des Gymnasten während der Übung aus. Aufgrund der erfassten Punktwolke und der Kenntnisse im Bereich von Anatomie und Biomechanik wird ein Bewegungsmodell der ausgewählten unsichtbaren Körperteile (Organe, Knochen, Gelenke, Bänder) erzeugt. Das digitale Modell wird verfeinert, um die (anatomisch und biomechanisch) ideale Ausführung der gewählten Übung besser zu veranschaulichen. Um den Patienten durch das Aussehen des übenden Heilgymnasten nicht abzulenken und um dem Patienten seine Identifikation mit dem abgebildeten (gefilmten) Gymnasten zu vereinfachen, wird im Video ein halb-durchsichtiges Modell der menschlichen Figur benutzt. Bei diesem Modell handelt es sich um eine Figur mit einer durchschnittlichen Körpergestaltung ohne sichtbare sekundäre Geschlechtsmerkmale. Das Modell enthält dabei eine schematische Darstellung des Rückgrats, wobei einzelne Wirbel jeweils markiert abgebildet werden. Während der Übung werden einzelne Körperbereiche der Reihe nach rhythmisch ein- und ausgeblendet. Diese Körperbereiche entsprechen den Wirbeln, die gerade bei Körperbeugung betätigt werden. Die Einblendung wird durch eine entsprechende zu- und abnehmende Tonstärke begleitet. Zusätzlich wird eine Episode erstellt, in der das Modell unbeweglich bleibt, während einzelne mit bestimmten Wirbeln zusammengehörende Körperbereiche am Modellkörper der Reihe nach von oben nach unten rhythmisch ein- und ausgeblendet werden. Die Einblendung wird von einer entsprechenden zu- und abnehmenden Tonstärke begleitet. Die zusätzliche Episode wird vorteilhaft dreimal vor der Hauptepisode mit der Veranschaulichung der Übung vorgeführt. Die Hauptepisode wird ebenfalls vorteilhaft dreimal vorgeführt. Während seiner Übung saß der Patient mit seinem Gesicht dem Bildschirm zugewandt. Der Bildschirm war dabei 0,7 m groß. Es wurde ein 0,4 m langer Zeigestock benutzt. Der Gymnast war am Unterricht mitbeteiligt. Der Bildschirm war direkt vor dem Patienten angeordnet. Die Bewegungsmuskeln der Augen waren völlig entspannt. Der Rücken war in keinem Kontakt mit anderen Gegenständen. Der Blick des Patienten war entspannt, als ob er in die Ferne "durch den Bildschirm hindurch" schaute. Während der dreimaligen Vorführung der ersten Episode blieb die halbdurchsichtige Figur auf dem Bildschirm unbeweglich. Ihr Körper enthielt die schematische dreidimensionale Darstellung des Rückgrats (Brustwirbelsäule, Lendenwirbelsäule, Kreuzbein). Die den Wirbeln zugeordneten Körperbereiche wurden ab dem 1. Brustwirbel aufeinanderfolgend von oben nach unten in regelmäßigen Zeitabständen ein- und ausgeblendet (leuchteten auf und erloschen). Dieser Prozess wurde dabei simultan von einem jeweils zu- und abnehmenden Ton begleitet. Der Gymnast berührte mit seinem Zeigestock den Rücken des Patienten gemäß der Mittellinie jedes Mal beim nächsten angeleuchteten Wirbel. Im Endeffekt entwickelte sich beim Patienten neurologisch die Identifikation (Illusion einer Assoziation) mit der Figur auf dem Bildschirm. Während der Vorführung der eigentlichen Übungsepisode wurde ein oder ein anderer Wirbel der Figur aufeinanderfolgend eingeblendet. Danach erfolgte die Beugung der Figur vorwiegend an diesem Wirbel. Dabei stand der Patient maximal entspannt und unbeweglich. Sein Blick war in die Ferne gerichtet. Der Gymnast berührte mit seinem Zeigestock den Rücken des Patienten gemäß der Mittellinie des Körpers, so dass die Berührungsstelle mit den Wirbelprojektionen in ihrem normalen Zustand (Grundstellung) ungefähr zusammenfiel. Diese Berührungen erfolgten simultan mit dem Ton und der Einblendung. Die Episode wurde dreimal wiederholt. Die Übung wurde zweimal täglich durchgeführt.

Die Ergebnisse der Anwendung dieses Verfahrens ließen sich nach täglichem Üben zwei Wochen später erkennen. Der volle Effekt der Haltungsverbesserung (Aufrichten) wurde nach neun Monaten täglicher Übung erreicht. Das hängt mit der Zeit zusammen, die benötigt wird, um neue sinaptische Zusammenhänge im Gehirn des Patienten zu schaffen. Der Effekt blieb im Laufe von zwei Jahren nach der Behandlung stabil erhalten.

## Patentansprüche

1. Vorrichtung zur Entwicklung der richtigen Körperhaltung,
umfassend:
ein erstes Mittel, angepasst zur Darstellung eines auf einen Datenträger gespeicherten Bildmaterials mit der Darstellung eines eine Übung ideal ausführenden Menschen und zur Einblendung bestimmter Körperbereiche gleichzeitig mit einer taktilen Einwirkung auf die gleichen Bereiche der Wirbelsäule eines Patienten;
ein zweites Mittel, angepasst zur Darstellung von Bereichen des Körpers im vorstehenden Bildmaterial mittels Anleuchtung;
ein drittes Mittel angepasst zur Wiedergabe von Tönen.

2. Vorrichtung nach Anspruch 1,
wobei sie weiterhin ein Mittel aufweist, das zum Sitzen, Stehen oder Liegen des Patienten angepasst ist.

3. Vorrichtung nach einem der vorhergehenden Ansprüche,
wobei im Bildmaterial ein Mensch als ein Modell einer halbdurchsichtigen menschlichen Figur mit einer durchschnittlichen Körpergestaltung ohne sichtbare sekundäre Geschlechtsmerkmale dargestellt ist.

4. Vorrichtung nach Anspruch 3,
wobei das Modell dabei eine schematische Darstellung des Rückgrats enthält, wobei einzelne Wirbeln jeweils markiert abgebildet sind.

5. Vorrichtung nach einem der vorhergehenden Ansprüche,
wobei das Bildmaterial zwei Teile aufweist, wobei die Modellfigur im ersten Teil unbeweglich bleibt, einzelne Körperbereiche im Körper der Modellfigur der Reihe nach von oben nach unten rhythmisch ein- und ausgeblendet werden, wobei diese Körperbereiche den jeweiligen Wirbeln entsprechen und die Ein-und Ausblendung dabei von einer zu- und abnehmenden Tonstärke begleitet wird und die Modellfigur im zweiten Teil eine Übung ideal ausführt, jeder der am meisten durch die Einwirkung der Rückenmuskulatur beanspruchten Wirbel während der Übung der Reihen nach eingeblendet wird.
